# EUROPÄISCHE PATENTSCHRIFT

(11) **EP 2 785 891 B1**
(45) Veröffentlichungstag und Bekanntmachung des Hinweises auf die Patenterteilung: **15.04.2020**
(21) Anmeldenummer: 12790913.3
(22) Anmeldetag: 26.11.2012
(51) Int. Cl.: C23C 8/02, C23C 8/10, C23C 8/14, B23K 35/22, C23C 14/58, B01J 37/02, F01N 3/28, B01J 37/00, C23C 10/02, C23C 24/08, F01N 3/08, B01J 23/75, B01J 21/04, B01J 35/04, C21D 8/04

(54) **DIFFUSIONSSPERRSCHICHT BEI EINER ABGASBEHANDLUNGSEINHEIT**
DIFFUSION BLOCKING LAYER IN AN EXHAUST TREATMENT UNIT
COUCHE BARRIÈRE ANTI-DIFFUSION POUR UNITÉ DE TRAITEMENT DE GAZ D'ÉCHAPPEMENT

(30) Priorität: 30.11.2011 DE 102011119740
(43) Veröffentlichungstag der Anmeldung: 08.10.2014
(73) Patentinhaber: Vitesco Technologies GmbH, 30165 Hannover (DE)
(72) Erfinder: LUTZ, Dieter, 98617 Meiningen (DE)
(86) Internationale Anmeldenummer: PCT/EP2012/073634
(87) Internationale Veröffentlichungsnummer: WO 2013/079448

(56) Entgegenhaltungen:
- EP-A1- 0 870 531
- WO-A1-02/076614
- WO-A1-2011/151185
- DE-A1- 10 018 641
- DE-A1-102007 042 618
- DE-A1-102008 006 039
- DE-A1-102010 020 450
- US-A- 4 500 605

## Beschreibung

Die vorliegende Erfindung betrifft ein Verfahren zur Erzeugung einer Diffusionssperrschicht auf einem Metallblech, weiter ein Verfahren zur Herstellung einer Abgasbehandlungseinheit sowie eine Abgasbehandlungseinheit. Die vorliegende Erfindung ist insbesondere auf das technische Gebiet der Abgastechnologie von Kraftfahrzeugen gerichtet, wobei das Metallblech bzw. die Abgasbehandlungseinheit in einer Abgasanlage eines Kraftfahrzeugs eingesetzt werden kann.

Kraftfahrzeuge und Nutzfahrzeuge sind einer Vielzahl von Abgasvorschriften unterworfen, deren Einhaltung durch entsprechend gestaltete Abgasanlagen sichergestellt wird. Es sind Abgasanlagen bekannt, die zumindest eine Abgasbehandlungseinheit aufweisen, welche zumindest teilweise mit einem metallischen Wabenkörper gebildet ist. Dieser metallische Wabenkörper wird zum Beispiel als Trägerkörper für katalytisch aktive Materialien, für Beschichtungen zur Speicherung von Abgaskomponenten und/oder als Partikelabscheider eingesetzt. Die Abgasbehandlungseinheit wird hierzu regelmäßig zumindest teilweise beschichtet, um an unterschiedlichen Stellen in der Abgasanlage eines Kraftfahrzeugs unterschiedliche Bestandteile des Abgases zu beeinflussen bzw. umzusetzen oder andere Funktionen zur Abgasbehandlung zu erfüllen.

Innerhalb eines zumindest teilweise metallischen Wabenkörpers einer Abgasbehandlungseinheit werden infolge eines Lötprozesses Lötverbindungen erzeugt, so dass eine Fixierung der einzelnen Komponenten des metallischen Wabenkörpers zueinander und/oder mit sich selbst, und/oder eine dauerhafte Positionierung des Wabenkörpers in einem Gehäuse, erreicht wird.

Solche metallischen Wabenkörper und Gehäuse sind insbesondere durch einen Grundwerkstoff mit den folgenden Eigenschaften gebildet:

### Metallfolien des Wabenkörpers

- Gefüge:: Ferrit
- Zusammensetzung:: FeCrAl-Legierung mit einem Chromgehalt von mindestens 12 Gew.-% und einem Aluminiumgehalt von mindestens 2,5 Gew.-%. Zusätze an Seltenen Erden, Y und/oder Hf zur Steuerung einer Al₂O₃ Deckschichtbildung sind möglich
- Material-Beispiel:: Werkstoffe mit der Nummer 1.4767 oder 1.4725 des Deutschen Stahlschlüssels
- Materialdicke:: 20 um [Mikrometer] bis 150 µm
- Form:: zumindest teilweise strukturiert; glatt
- Gehäuse Gefüge:: Austenit oder Ferrit
- Materialdicke:: 0,1 mm [Millimeter] bis 3 mm
- Form:: zylindrisch; oval; konisch

### Lotmaterial:

- Form:: Lotpulver; Lotband
- Zusammensetzung:: Nickel-Basis-Lot, wobei als Hauptzusatzstoffe Chrom, Phosphor und Silicium vorhanden sind. Ganz besonders bevorzugt ist, dass die Anteile der Haupt-Zusatzstoffe in folgender Reihe abnehmen: Chrom, Phosphor, Silicium. Bevorzugt ist, dass der Chromgehalt des Nickel-Basis-Lots oberhalb des Chrom-Anteils des Werkstoffs des Wabenkörpers liegt, beispielsweise im Bereich von 23 bis 25 Gew.-%. Die HauptZusatzstoffe Phosphor und Silicium sollten zusammen den Anteil des Chroms nicht übertreffen.
- Material-Beispiel:: Entsprechende Nickel-Basis-Lote sind beispielsweise unter der Bezeichnung Nicrobraz der Fa. Wall Colmonoy Ltd. erhältlich.

Bei der Herstellung einer Abgasbehandlungseinheit kann es erforderlich sein, dass Lötverbindungen nur an bestimmten Kontaktstellen zwischen Komponenten der Abgasbehandlungseinheit vorgesehen oder explizit gewünscht sind. Durch diese (nur) lokal begrenzt vorliegenden Lötverbindungen in dem Wabenkörper und/oder zwischen Wabenkörper und Gehäuse wird eine Flexibilität der Abgasbehandlungseinheit beibehalten. Diese Flexibilität führt dazu, dass die Abgasbehandlungseinheit, trotz der im Abgassystem herrschenden wechselnden Temperaturen und Drücke, eine höhere Dauerfestigkeit beim Einsatz in der Abgasleitung eines Kraftfahrzeugs erreichen kann. Die gewünschten Lötverbindungen können, z. B. durch das (gezielte) Einbringen von Lotmaterial nur an bestimmten Kontaktstellen des Wabenkörpers bzw. der Abgasbehandlungseinheit, erzeugt werden. Es ist in diesem Zusammenhang auch möglich, eine Passivierungsschicht auf vorbestimmte Bereiche der Abgasbehandlungseinheit aufzubringen, so dass unerwünschte Verbindungen an Kontaktstellen verhindert werden. Hierzu wurden bereits ein unerwünschter Fluss von Lotmaterial und/oder eine unerwünschte Diffusion von Legierungselementen aus dem Grundwerkstoff betrachtet.

Auch wenn bereits einige Maßnahmen zur gezielten Ausbildung von Lötverbindungen und/oder zur Vermeidung von unerwünschten anderen Verbindungen (im Folgenden Sekundärverbindungen, Diffusionsverbindungen) an Kontaktstellen bei der Herstellung solcher Abgasbehandlungseinheiten vorgeschlagen wurden, die mittels Hochtemperaturlötens unter Vakuum oder unter Schutzgas gefügt sind, besteht weiter ein Bedürfnis, diesen Prozess für die Serienfertigung zu vereinfachen, sicherer zu gestalten, kostengünstiger ablaufen zu lassen und/oder weitere Störeinflüsse für das Lötverfahren zu vermeiden.

Aus DE 10 2008 006 039 A1 ist ein Verfahren zum Verbinden von metallischen Bauteilen eines Brennstoffzellenstapels bekannt. Das dort vorgeschlagene Verfahren offenbart die Beschichtung eines ersten Bauteils mit Aluminium oder einer Aluminiumlegierung, die Diffusion der Beschichtung in das Grundmaterial, die Oxidation der Beschichtung, die Kontaktierung mit einem zweiten Bauteil und die Diffusion zwischen Oxidschicht und Grundmaterial des zweiten Bauteils. Dort werden also zwei Bauteile durch einen Diffusionsprozess über eine Oxidschicht miteinander verbunden.

Die US 4 500 605 A ist auf ein Bauteil für elektrotechnische Anwendungen gerichtet und offenbart ein Verfahren, durch das eine elektrisch isolierende Aluminiumoxidzwischenschicht in einem sonst elektrisch leitenden Material hergestellt wird. Dabei wird ein Bauteil aus einer Legierung von einem der Elemente Kupfer, Eisen oder Nickel zusammen mit 0,5 bis 12 % Aluminium zuerst erwärmt und in sauerstoffhaltiger Atmosphäre oxidiert und nachfolgend reduziert.

Die EP 0 870 531 A1 ist auf einen Autoabgaskatalysator gerichtet, der eine einschichtige, katalytisch aktive Beschichtung aus Aluminiumoxid und Nickeloxid aufweist.

Aus der WO 02/076614 A1 ist ein Verfahren zum Auftragen eines Washcoats (Aluminiumoxid) auf einen Wabenkörper bekannt.

Aus der nachveröffentlichten WO 2011/151185 A1 ist eine Komponente einer Abgasbehandlungseinheit bekannt, die aus einem Werkstoff umfassend Eisen, Chrom, Aluminium besteht. Die Komponente weist eine kobalthaltige Oberflächenschicht auf. Es wird weiter ein Verfahren beschrieben, in dem die Komponente mit Kobalt oder Kobaltoxid beschichtet wird und nachfolgend Lötverbindungen erzeugt werden. Durch die Kobaltbeschichtung werden Chromkarbid-Verbindungen zwischen benachbarten Metallfolien verhindert. Während einer Wärmebehandlung wird eine Aluminiumoxidschicht gebildet, wobei das Kobalt teilweise in den Grundwerkstoff hinein und das Aluminium aus dem Grundmaterial heraus diffundiert.

Aufgabe der Erfindung ist es daher, die mit Bezug auf den Stand der Technik geschilderten technischen Probleme zumindest teilweise zu lösen. Insbesondere soll ein Verfahren zur Erzeugung einer Diffusionssperrschicht auf einem Metallblech angegeben werden, das eine besonders exakte und definierte Ausprägung von Lötverbindungen ermöglicht und die Gefahr der späteren Ausbildung von unerwünschten Diffusionsverbindungen an dem Metallblech verringert. Weiterhin soll ein Verfahren zur Herstellung einer Abgasbehandlungseinheit vorgeschlagen werden, so dass Lötverbindungen (nur) an vorbestimmten Stellen der Abgasbehandlungseinheit erzeugt und unerwünschte Diffusionsverbindungen in der Abgasbehandlungseinheit vermieden werden. Darüber hinaus soll eine Abgasbehandlungseinheit angegeben werden, bei der Lötverbindungen (nur) an vorbestimmten Kontaktstellen erzeugt und unerwünschte Diffusionsverbindungen an weiteren Kontaktstellen vermieden werden können.

Diese Aufgaben werden gelöst durch ein Verfahren zur Erzeugung einer Diffusionssperrschicht auf einem Metallblech mit den Merkmalen des Patentanspruchs lund durch ein Verfahren zur Herstellung einer Abgasbehandlungseinheit mit den Merkmalen des Patentanspruchs 7. Weitere vorteilhafte Weiterbildungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausgestaltungen der Erfindung aufgezeigt werden. Insbesondere können Merkmale, die auf das Verfahren zur Erzeugung einer Diffusionssperrschicht auf ein Metallblech, auf das Verfahren zur Herstellung einer Abgasbehandlungseinheit oder auf die Abgasbehandlungseinheit gerichtet sind, miteinander kombiniert oder auf die jeweils anderen Gegenstände der Erfindung übertragen werden.

Das Verfahren zur Erzeugung einer Diffusionssperrschicht umfassend Aluminiumoxid auf einem Metallblech, das aus einem Eisenwerkstoff (Eisen: Fe, Ordnungszahl 26) als Grundwerkstoff besteht, der als Hauptlegierungselemente zusätzlich Chrom (Cr, Ordnungszahl 24) und Aluminium (A1, Ordnungszahl 13) enthält, wobei einerseits der Chromanteil mindestens um den Faktor 3 größer ist als der Aluminiumanteil und/oder andererseits der Chromanteil im Bereich von 12 bis 25 Gewichts-% liegt während der Aluminiumanteil im Bereich von 1 bis 7 Gewichts-% liegt. weist zumindest folgende Schritte auf:
a) Bereitstellen des Metallblechs,
b) Applizieren zumindest eines Metalloxides, ausgewählt aus der Gruppe Kobaltoxid (insbesondere Co₃O₄, das bis zu 900 °C stabil ist) und Nickeloxid (insbesondere NiO), oder Applizieren zumindest einer Materialverbindung, die infolge einer Temperaturerhöhung zumindest ein Metalloxid ausgewählt aus der Gruppe Kobaltoxid und Nickeloxid bilden kann, auf zumindest einem Teilbereich einer Oberfläche des Metallblechs als Oberflächenschicht,
c) Durchführen einer Wärmebehandlung oberhalb von 650 ° C unter Vakuum oder Schutzgas mit dem Metallblech aufweisend die Oberflächenschicht, so dass nur in dem zumindest einen Teilbereich in der Oberflächenschicht eine Diffusionssperrschicht umfassend Aluminiumoxid entsteht. Dabei entsteht das Aluminiumoxid (hauptsächlich) durch Reduktion des Metalloxids zu einem Metall und (gleichzeitiger) Oxidation von aus dem Grundwerkstoff ausdiffundierendem Aluminium zu Aluminiumoxid.

Das Metallblech ist insbesondere eine Metallfolie mit einer Dicke zwischen 10 µm [Mikrometer] und 3 mm [Millimeter]. Ganz besonders bevorzugt beträgt die Dicke des Metallblechs im Fall des Einsatzes als Metallfolie im Wabenkörper zwischen 30 µm und 120 µm; für den Fall des Einsatzes als Gehäuse dahingegen beispielsweise von 0,5 mm bis 2,2 mm. Das Metallblech kann auch Strukturierungen (z. B. Wellungen, Noppen, Prägungen, etc.) und/oder Öffnungen aufweisen. Gegebenenfalls ist das Metallblech durch feine, metallische Drähte (nach Art eines Vlies, Gewirk, Gewebe, etc.) gebildet, die jeweils einen Durchmesser zwischen 5 µm und 100 um und eine Länge zwischen 30 µm und 10 mm aufweisen.

Der Schritt b) des Verfahrens erfolgt insbesondere mittels eines Tauchbeschichtungsprozesses oder eines Abscheidungsprozesses oder eines anderen geeigneten Abscheideverfahrens oder Auftragsverfahren. Dabei wird zumindest ein Metalloxid, ausgewählt aus der Gruppe Kobaltoxid (Co₃O₄) und Nickeloxid (insbesondere NiO), oder zumindest eine Materialverbindung, die ein derartiges Metalloxid thermisch bilden kann, auf zumindest einen Teilbereich einer Oberfläche des Metallblechs als Oberflächenschicht aufgebracht. Bevorzugt ist, dass genau eine einzige Art Metalloxid bei dem vorbestimmten Metallblech aufgetragen wird. Der Teilbereich der Oberfläche kann einen (einzigen) zusammenhängenden Abschnitt der Oberfläche betreffen oder eine Mehrzahl/Vielzahl von (kleineren) Abschnitten. Zudem ist möglich, dass der Teilbereich nur eine Seite der Oberfläche des Metallblechs betrifft. Ganz besonders bevorzugt ist, dass mindestens 90% oder sogar die gesamte Oberfläche des Metallblechs mit dem ausgewählten Metalloxid und/oder mit der Materialverbindung versehen sind. Nach Schritt b) liegt insbesondere ein fester Materialverbund von Metalloxid und/oder Materialverbindung und Grundwerkstoff vor. Insbesondere wird in Schritt b) des Verfahrens eine Materialverbindung appliziert, die, z. B. infolge einer separaten (vorgelagerten) Wärmebehandlung und/oder auch durch die Wärmebehandlung in Schritt c), Kobaltoxid und/oder Nickeloxid bildet. Ein Beispiel einer solchen Materialverbindung ist ein Hydroxid von Nickel und/oder Kobalt. Damit könnte diese Materialverbindung auch als eine Art Metalloxidbildner oder Metalloxidvorläufer bezeichnet werden. Dabei ist insbesondere gewünscht, diese Umwandlung bzw. Bildung der Metalloxide auch unter Vakuum und/oder Schutzgas zu erreichen.

In einem Schritt c) wird eine Wärmebehandlung durchgeführt. Insbesondere wird hierbei zuerst die Materialverbindung zumindest teilweise infolge der Temperaturerhöhung aufgelöst und/oder zersetzt, so dass nun zumindest ein Metalloxid aus der Gruppe Nickeloxid und Kobaltoxid vorliegt.

Die Wärmebehandlung in Schritt c) kann vom Fachmann insbesondere ohne Weiteres auf die Zusammensetzung der Materialien angepasst werden, insbesondere hinsichtlich der Auswahl einer geeigneten Temperatur. Die Temperatur bzw. die Zeitspanne der Wärmebehandlung kann angepasst werden, z. B. lassen ggf. erhöhte Temperaturen auch eine kürzere Wärmebehandlung zu. Durch die Erwärmung des Metallblechs diffundiert das in dem Grundwerkstoff vorliegende Aluminium in Richtung der Oberflächenschicht und dringt in diese ein. In der Oberflächenschicht reagiert das Aluminium insbesondere mit dem an das Metalloxid gebundenen Sauerstoff zu Aluminiumoxid. Diese Reaktion erfolgt insbesondere gemäß der folgenden Reaktionsformel:

3 Co₃O₄ + 8 Al => 9 Co + 4 Al₂O₃

bzw.

3 NiO + 2 Al => 3 Ni + Al₂O₃

Insbesondere bildet sich das Aluminiumoxid entsprechend zuerst im Bereich der Oberfläche des Metallblechs aus, weil hier das in die Oberflächenschicht eindiffundierende Aluminium mit dem Sauerstoff des in der Oberflächenschicht vorliegenden Metalloxids reagiert. Folglich entsteht an der Oberfläche des Metallblechs und insbesondere (ausschließlich) in der Oberflächenschicht eine Diffusionssperrschicht aus Aluminiumoxid, die eine Diffusion von weiteren Elementen, insbesondere des Grundwerkstoffs, in die Oberflächenschicht zumindest weitgehend (vollständig) verhindert. Insbesondere wird weiterhin eine Diffusion von Elementen, z. B. aus der Oberflächenschicht, in den Grundwerkstoff hinein ebenfalls (vollständig) verhindert.

In der Oberflächenschicht liegt nach Durchführung der Wärmebehandlung gemäß Schritt c) insbesondere eine Diffusionssperrschicht umfassend Aluminiumoxid vor. Weiterhin ist dort insbesondere ein elementares Metall aus der Gruppe Kobalt und Nickel festzustellen. Somit ist insbesondere eine metallische Oberflächenschicht nach Durchführung des Schritts c) des Verfahrens gegeben, die insbesondere eine gute Eignung zur späteren Ausbildung von Lötverbindungen aufweist.

Das Metalloxid oder die Materialverbindung in der Oberflächenschicht dienen insbesondere als Träger für den Sauerstoff, so dass das Aluminium (aus dem Grundwerkstoff) (ausschließlich) mit dem derart bereitgestellten Sauerstoff zu Aluminiumoxid reagiert.

Die Wärmebehandlung in Schritt c) wird insbesondere unter Vakuum oder einer Schutzgasatmosphäre durchgeführt. Insbesondere wird kein Sauerstoff zugeführt. Die Reaktion während der Wärmebehandlung, die unter Beteiligung von Sauerstoff zur Bildung von Aluminiumoxid führt, erfolgt insbesondere nur unter Beteiligung von Sauerstoff, der bereits vor der Wärmebehandlung (zumindest) in der Oberflächenschicht an das Metalloxid und/oder an die Materialverbindung gebunden war (und in der Oberflächenschicht vorlag).

Gegebenenfalls können geringe Mengen an Sauerstoff während der Wärmebehandlung trotz Vakuum oder Schutzgasatmosphäre noch vorhanden sein. Gleichwohl ist dieser "Restsauerstoff" unzureichend, eine diffusionsdichte Ausgestaltung einer Aluminiumoxidschicht an der Oberfläche der Metallbleche zu bilden.

Dem Fachmann auf diesem Gebiet sind diese Legierungs- bzw. Umwandlungsprozesse geläufig, so dass er ohne Weiteres die hier angesprochenen chemischen Prozesse nachvollziehen, imitieren und kontrollieren kann. Zudem wird nachfolgend noch ein anschauliches Beispiel angegeben.

Als Beispiel für eine geeignete Wärmebehandlung könnten die Umgebungstemperatur über 1.000 °C und die Behandlungszeit zwischen 10 Minuten und 60 Minuten bei einer Vakuum-Atmosphäre gewählt werden. Ganz besonders bevorzugt ist, dass eine Umgebungstemperatur 1.200 °C nicht überschreitet. Dabei ist anzumerken, dass die Wärmebehandlung auch mehrstufig ausgebildet sein kann, so dass zum Beispiel eine Vorwärmphase von 20 Minuten bis 60 Minuten bei einer Umgebungstemperatur unterhalb von 1.000 °C durchgeführt werden kann, ggf. bei einer Umgebungstemperatur oberhalb von 400 °C oder auch oberhalb 800 °C. Ebenso kann sich eine Abkühlphase anschließen, die sich beispielsweise über einen Zeitraum von 15 Minuten bis 40 Minuten erstreckt. Die Wärmebehandlung kann sich insbesondere insgesamt über einen Zeitraum von mindestens 2 Stunden, ggf. auch mindestens 3 Stunden erstrecken.

Gemäß einer bevorzugten Weiterbildung des Verfahrens liegt das Metalloxid oder die Materialverbindung in der Oberflächenschicht in Schritt b) mit einem Anteil von mindestens 40 Gewichts-% vor. Bevorzugt liegt das Metalloxid und/oder die Materialverbindung hier mit einem Anteil von mindestens 60 Gewichts-% und besonders bevorzugt mit einem Anteil von mindestens 80 Gewichts-% vor. Insbesondere weist die Oberflächenschicht kein Eisen (Fe) und/oder kein Chrom (Cr) auf. Bevorzugt ist, dass die Oberflächenschicht kein Aluminium (Al) aufweist.

Gemäß einer vorteilhaften Ausgestaltung ist nach Durchführung des Schrittes c) des Verfahrens das Aluminiumoxid homogen in der Oberflächenschicht verteilt. Insbesondere bedeutet in diesem Zusammenhang "homogen", dass das Aluminiumoxid gleichmäßig (über die Dicke) in der Oberflächenschicht verteilt ist, insbesondere mit einer Abweichung von höchstens 5 Gewichts-%. Die Abweichung kann insbesondere durch Vergleich der ermittelten Anteile in Gewichts-% in verschiedenen Messbereichen bestimmt werden. Diese Messbereiche umfassen insbesondere jeweils eine Fläche von 50 bis 400 nm², insbesondere von 100 nm² [Quadratnanometer], sind jedoch keinesfalls auf diese Größe der Fläche festgelegt.

Gemäß einer weiteren vorteilhaften Ausgestaltung hat sich nach Durchführung des Schrittes c) der Anteil von einem elementar vorliegenden Metall des Metalloxids und/oder der Materialverbindung in der Oberflächenschicht um mindestens 5 Gewichts-% erhöht, bevorzugt um mindestens 10 Gewichts-% und besonders bevorzugt um mindestens 20 Gewichts-%. Insbesondere resultiert diese Erhöhung des Anteils des nun elementar vorliegenden Metalls (hauptsächlich) aus der Reaktion des Aluminiums mit dem Metalloxid und/oder der Materialverbindung. Das Aluminium, das aus dem Grundwerkstoff in die Oberflächenschicht hineindiffundiert ist, löst also den Sauerstoff aus der Verbindung des Metalloxids und/oder der Materialverbindung, so dass elementares Metall in der Oberflächenschicht gebildet wird. Insbesondere wird mindestens 80 Gewichts-% des vor Schritt c) vorliegenden Metalloxids und/oder der Materialverbindung in der Oberflächenschicht infolge der Durchführung des Schrittes c) zu elementar vorliegendem Metall umgewandelt. Bevorzugt werden mindestens 90 Gewichts-% und ganz besonders bevorzugt mindestens 99 Gewichts-% umgewandelt.

Gemäß dem Anspruch 1 liegt in Schritt a) des Verfahrens der Anteil von Aluminium im Grundwerkstoff zwischen 1 und 7 Gewichts-% , wobei insbesondere der Anteil von Aluminium in der Oberflächenschicht in Schritt b) des Verfahrens höchstens 2 Gewichts-%, bevorzugt höchstens 1 Gewichts-% und besonders bevorzugt höchstens 0,1 Gewichts-% beträgt.

Gemäß einer vorteilhaften Weiterbildung beträgt nach Durchführung des Schrittes c) der Anteil von Aluminium in der Diffusionssperrschicht mindestens 15 Gewichts-%, bevorzugt mindestens 20 Gewichts-%.

Die Diffusionssperrschicht wird insbesondere in einem Bereich der Oberflächenschicht bzw. ausgehend von einem Bereich zwischen der Oberflächenschicht und dem Grundwerkstoff gebildet, der unmittelbar nach Schritt c) einen Anteil von Aluminium von mindestens 15 Gewichts-% und bevorzugt von mindestens 20 Gewichts-% aufweist.

Insbesondere wird angestrebt, dass sich in der gesamten Oberflächenschicht eine entsprechende Diffusionssperrschicht ausbildet, das heißt insbesondere, dass in der gesamten Oberflächenschicht, unmittelbar nach Durchführung des Schritts c), der Anteil von Aluminium mindestens 15 Gewichts-%, bevorzugt mindestens 20 Gewichts-%, beträgt.

Insbesondere liegt nach dem Wärmebehandlungsprozess gemäß Schritt c) Aluminium mit einem Anteil in Gewichts-% im gesamten Bereich der Oberflächenschicht vor, der den im (gesamten) Grundwerkstoff des Metallblechs vorliegenden Anteil in Gewichts-% an Aluminium um mindestens den Faktor 2, bevorzugt mindestens um den Faktor 3, übersteigt und mindestens 5 Gewichts-% beträgt.

Gemäß einer vorteilhaften Weiterbildung weist die Oberflächenschicht nach Durchführung des Schrittes b) eine Dicke von höchstens 1 µm [Mikrometer] auf, insbesondere eine Dicke von höchstens 0,5 µm, bevorzugt höchstens 0,25 µm und besonders bevorzugt höchstens 0,1 um.

Insbesondere die Dicke der Oberflächenschicht und die Intensität (Temperaturhöhe und Dauer) der Wärmebehandlung beeinflussen die Ausbildung der Diffusionssperrschicht in der Oberflächenschicht. Insbesondere durch Bereitstellung einer besonders dünnen Oberflächenschicht wird erreicht, dass sich die Diffusionssperrschicht in der gesamten Oberflächenschicht homogen ausbildet.

Die Ausbildung der Diffusionssperrschicht führt insbesondere dazu, dass eine Diffusion anderer Elemente als Aluminium aus dem Grundwerkstoff in die Oberflächenschicht hinein verhindert wird. Insbesondere wird durch die Diffusionssperrschicht erreicht, dass eine Diffusion von anderen Elementen in den Grundwerkstoff hinein (weitestgehend) verhindert wird.

Insbesondere führt eine dickere Oberflächenschicht und/oder eine weniger intensive Durchführung der Wärmebehandlung dazu, dass sich das Aluminiumoxid (nur bzw. vorrangig) in der Nähe der Oberfläche des Metallblechs in der Oberflächenschicht ausbildet, wobei dann ein entsprechend mehrschichtiger Aufbau ausgehend von dem Grundwerkstoff in der folgenden Reihenfolge gebildet ist: Grundwerkstoff, Diffusionssperrschicht (mit elementar vorliegendem Metall des Metalloxids), Metalloxid und/oder Materialverbindung. Insbesondere diffundiert das Aluminium nicht in die gesamte Oberflächenschicht (in Richtung der Dicke), so dass das Metalloxid nur teilweise in elementares Metall umgewandelt wird.

Gemäß einer vorteilhaften Ausgestaltung des Verfahrens weist der Grundwerkstoff in Schritt a) einen Anteil von höchstens 20 Gewichts-% des Metalls des Metalloxids oder der Materialverbindung aus Schritt b) auf. Insbesondere weist der Grundwerkstoff in Schritt a) höchstens 10 Gewichts-%, bevorzugt höchstens 5 Gewichts-% und besonders bevorzugt höchstens 1 Gewichts-% des Metalls des Metalloxids oder der Materialverbindung aus Schritt b) auf. Insbesondere weist der Grundwerkstoff in Schritt a) 0 Gewichts-% des Metalls des Metalloxids und/oder der Materialverbindung aus Schritt b) auf.

Insbesondere erhöht sich der Anteil des Metalls des Metalloxids in der Oberflächenschicht infolge der Wärmebehandlung in Schritt c) nicht durch eine Diffusion des Metalls aus dem Grundwerkstoff in die Oberflächenschicht. Diese Erhöhung des Anteils des Metalls erfolgt (ausschließlich) durch eine Reduktion des Metalloxids in das elementare Metall unter gleichzeitiger Bildung von Aluminiumoxid durch Oxidation des in die Oberflächenschicht hineindiffundierenden Aluminiums.

Weiterhin wird ein Verfahren zur Herstellung einer Abgasbehandlungseinheit vorgeschlagen, wobei die Abgasbehandlungseinheit einen Wabenkörper und ein Gehäuse aufweist und zumindest der Wabenkörper oder das Gehäuse mit einem Metallblech gebildet ist. Insbesondere gelten die obigen Ausführungen zu dem Metallblech für das hier vorgeschlagene Verfahren entsprechend. Das Metallblech besteht aus einem Grundwerkstoff, der zumindest Eisen (Fe), Chrom (Cr) und Aluminium (Al) enthält.

Das Verfahren umfasst wenigstens die folgenden Schritte:
i) Bereitstellen mindestens eines Metallblechs zur Ausbildung eines Gehäuses oder eines Wabenkörpers,
ii) Applizieren zumindest eines Metalloxides ausgewählt aus der Gruppe Kobaltoxid und Nickeloxid oder Applizieren zumindest einer Materialverbindung, die infolge einer Temperaturerhöhung zumindest ein Metalloxid ausgewählt aus der Gruppe Kobaltoxid und Nickeloxid bilden kann, auf zumindest einem Teilbereich einer Oberfläche des mindestens einen Metallblechs als Oberflächenschicht,
iii) Ausbilden eines Wabenkörpers und Einfügen des Wabenkörpers in ein Gehäuse,
iv) Beloten zumindest des Wabenkörpers oder des Gehäuses in mindestens einem Lotabschnitt,
v) Durchführen eines Lötprozesses oberhalb von 1.000 °C mit dem mindestens einen Metallblech aufweisend Metalloxid unter Vakuum oder Schutzgas, so dass
   - nur in dem zumindest einen Teilbereich in der Oberflächenschicht eine Diffusionssperrschicht umfassend Aluminiumoxid, unter Reduktion des Metalloxids zu einem Metall und Oxidation von aus dem Grundwerkstoff ausdiffundierendem Aluminium zu Aluminiumoxid entsteht, und
   - in dem mindestens einen Lotabschnitt eine Lötverbindung an dem mindestens einen Metallblech entsteht.

Die obigen Ausführungen zu Schritt a) und b) gelten insbesondere für die hier vorgeschlagenen Schritte i) und ii) des Verfahrens.

Die vorgeschlagenen Schritte i) bis v) des Verfahrens laufen insbesondere in der hier vorgeschlagenen Reihenfolge nacheinander ab. Insbesondere erfolgt jedoch der Schritt iv) vor oder gleichzeitig zu dem Schritt iii). Insbesondere handelt es sich bei dem hier vorgeschlagenen Metallblech der Abgasbehandlungseinheit um ein hochtemperaturfestes Metallblech, das insbesondere geeignet ist, den Temperaturwechseln und dynamischen Anforderungen sowie der korrosiven Umgebung im Abgassystem eines Kraftfahrzeugs dauerhaft standzuhalten. Dabei können Temperaturen über 800 °C und/oder erhebliche Druckimpulse infolge der Verbrennungsvorgänge in der Verbrennungskraftmaschine des Kraftfahrzeugs auf die Abgasbehandlungseinheit einwirken.

Im Hinblick auf den Grundwerkstoff wird offenbart dass ein Eisenwerkstoff verwendet wird, der als Hauptlegierungselemente zusätzlich Chrom und Aluminium aufweist. Erfindungsgemäß ist der Chromanteil mindestens um den Faktor 3 größer als der Aluminiumanteil und/oder der Chromanteil liegt im Bereich von 12 bis 25 Gewichts-% während der Aluminiumanteil im Bereich von 1 bis 7 Gewichts-% und bevorzugt im Bereich von 2,5 bis 6 Gewichts-% liegt. Zudem können Grundwerkstoffe eingesetzt werden, wie sie mit Bezug auf die eingangs beschriebene Metallfolie und/oder das Gehäuse angeführt sind, wobei die Beschreibung vollständig in Bezug genommen wird.

Die Oberflächenschicht bedeckt bevorzugt (nur) die Teilbereiche des Metallblechs, die nach der Anordnung des Metallblechs zu einer Abgasbehandlungseinheit mit anderen Komponenten der Abgasbehandlungseinheit Kontaktstellen ausbilden. Insbesondere bedeckt die Oberflächenschicht lediglich die Kontaktstellen, bei denen weder eine Lötverbindung noch eine Diffusionsverbindung gewünscht ist, so dass hier keine Anbindung der miteinander Kontaktstellen bildenden Komponenten der Abgasbehandlungseinheit erfolgt. Es ist aber auch möglich, dass eine Oberflächenschicht an Teilbereichen oder an der gesamten Oberfläche des Metallblechs appliziert wird, so dass Lötverbindungen nachfolgend darauf angeordnet werden. Die Oberflächenschicht sollte für sich geschlossen sein, also insbesondere keine signifikanten Poren hin zum Grundwerkstoff des Metallblechs ausbilden. Insbesondere ist die Oberflächenschicht nicht als Katalysatorschicht ausgebildet, insbesondere nicht für die Umsetzung von Schadstoffen in einem Abgas.

Die Oberflächenschicht bewirkt, dass die Elemente Chrom und Eisen (als Hauptbestandteil des Grundwerkstoffs des Metallblechs) zunächst nicht mehr an einer Kontaktstelle vorliegen. Von Chrom und Eisen ist bekannt, dass beide eine sehr hohe Affinität zu Kohlenstoff besitzen, und wenn dieser dort unter Lötbedingungen verfügbar ist, unweigerlich eine Chromkarbidbildung (Eisen-Chrom-Karbidbildung) einsetzt. Kobalt und Nickel hingegen bilden keine entsprechenden Karbide aus. Kobalt und Nickel sind mit Chrom und Eisen vollständig mischbar, besitzen aber selbst keine (nennenswerte) katalytische Funktion, die hier für die Abgasbehandlung nutzbar ist.

An den Kontaktflächen des Metallblechs mit anderen Komponenten der Abgasbehandlungseinheit oder mit sich selbst kommt es in Abhängigkeit vom lokalen Kohlenstoffangebot während des Lötprozesses zur Ausbildung fest haftender Chrom-Karbid-Brücken (Sekundärverbindung, Diffusionsverbindung). Unter ungünstigen Umständen entsteht so ein räumlich fein verteiltes Karbid-Skelett. Dieses Karbid-Skelett verbindet/verschweißt das Metallblech fest mit sich selbst und/oder anderen Komponenten der Abgasbehandlungseinheit und beeinflusst somit die Flexibilität der Anordnung des Metallblechs, z. B. in einer Abgasbehandlungseinheit, also die Flexibilität der Abgasbehandlungseinheit selbst. Mit Aufbringung einer das Chrom bzw. das Eisen abtrennenden Oberflächenschicht wird also der Wirkmechanismus der Chrom-Karbid-Bildung unterbrochen bzw. gehemmt. Dies wird nachfolgend erläutert.

Insbesondere wird durch das Bereitstellen des Metalloxids in der Oberflächenschicht der für die Erzeugung der hochtemperaturfesten und korrosionsfesten Aluminiumoxidschicht notwendige Sauerstoff (insbesondere ausschließlich) bereitgestellt. Damit kann bereits während des Lötprozesses (der insbesondere unter Schutzgas bzw. im Vakuum, also ohne Sauerstoff, durchgeführt wird) die schützende Aluminiumoxidschicht auf dem Metallblech gebildet werden. Damit entfällt insbesondere ein zusätzlicher nachgeordneter Oxidationsprozess der Abgasbehandlungseinheit. Durch diesen Oxidationsprozess wird üblicherweise eine entsprechende Aluminiumoxidschicht auf der Abgasbehandlungseinheit erzeugt, indem die Abgasbehandlungseinheit bei Temperaturen von mindestens 400 °C in sauerstoffhaltiger Atmosphäre behandelt wird.

Insbesondere wird durch die Bereitstellung des Metalloxids in der Oberflächenschicht erreicht, dass bereits während des Lötprozesses (nur) an vorbestimmten Teilbereichen des Metallblechs bzw. der Abgasbehandlungseinheit eine entsprechende Aluminiumoxidschicht bereitgestellt wird. Die Umwandlung des Metalloxids zu elementarem Metall in der Oberflächenschicht bewirkt weiterhin, dass die Oberflächenschicht metallische Eigenschaften beibehält, so dass eine Lötbarkeit dieser Bereiche der Oberflächenschicht erhalten bleibt. Gerade die Bildung von Spinellen ausgehend von dem Metalloxid in der Oberflächenschicht wird somit verhindert, so dass die metallischen Eigenschaften der Oberflächenschicht in vorteilhafter Weise beibehalten werden.

Zu verlötende Komponenten wie Metallfolien und Gehäuse können über Reste an kohlenstoffhaltigen Flüssigkeiten, wie z. B. Walzöl oder Wellöl verfügen. Durch Kapillareffekte ziehen sich diese Flüssigkeiten in die Zwickelbereiche z. B. zwischen Well- und Glattlagen eines Wabenkörpers zurück und benetzen so diese Komponenten. Nach dem Einschleusen in die Lötanlage beginnt die Evakuierung bzw. die Einbringung eines Schutzgases. Gleichzeitig erfolgt ein Temperaturanstieg. Eine Verbrennung der Flüssigkeiten ist nach Erreichen des Flammpunktes infolge des fehlenden Sauerstoffs nicht mehr möglich, so dass etwa ab 400 °C aufwärts ein Crack-Prozess einsetzt, der die Bildung von reinem, hochreaktivem Kohlenstoff zur Folge hat. Dieser Crack-Prozess findet auch bei Erzeugen der Lötverbindungen unter Schutzgas statt, da auch hier der Sauerstoff verdrängt wird und kohlenstoffhaltige Fertigungshilfsmittel gecrackt werden. Der Kohlenstoff entzieht den Komponenten das Chrom und verbindet aufeinanderliegende (Kontaktstellen bildende) Oberflächen von Komponenten unter Bildung von Chromkarbiden bzw. Eisen-Chromkarbiden dauerhaft über Karbidbrücken. Diese Karbidbrückenbildung ist selbst bei den üblichen Löttemperaturen von oberhalb 1.050 °C nicht mehr auflösbar. Zudem besitzt die Legierung des Grundwerkstoffs der Komponente jetzt ein Chromdefizit.

In dem kritischen Temperaturbereich von ca. 400 °C bis 800 °C, in dem die Chromkarbide gebildet werden, diffundiert das Aluminium aus dem Grundwerkstoff bereits in die Oberflächenschicht hinein. In der Oberflächenschicht bzw. an der Oberfläche des Metallblechs reagiert entsprechend das Aluminium mit dem Metalloxid aus der Gruppe Kobaltoxid und Nickeloxid. Es entsteht dort Aluminiumoxid und das Metalloxid wird zurückgebildet zu elementarem Metall. Durch die Bildung der Aluminiumoxidschicht in diesem Bereich wird eine Diffusionssperrschicht gebildet, so dass der Legierungsbestandteil Chrom aber auch das Eisen nicht aus dem Grundwerkstoff des Metallblechs heraus bzw. in die Oberflächenschicht hinein diffundieren können. Der Legierungsbestandteil Chrom bzw. das Eisen wird durch die Diffusionssperrschicht in dem Metallblech zurückgehalten und/oder abgedeckt, so dass eine Chromkarbidbrückenbildung in dem Teilbereich an Kontaktstellen mit benachbart angeordneten Komponenten verhindert wird.

Gemäß einer besonders vorteilhaften Ausgestaltung der Erfindung hat sich nach Überschreiten dieses Temperaturbereichs das Aluminium soweit in der Oberflächenschicht verteilt, das nun die Oberflächenschicht insgesamt eine Diffusionssperrschicht bildet. Durch die Oberflächenschicht wird die schützende Aluminiumoxidschicht an dem Metallblech bereits während des Lötprozesses erzeugt, also insbesondere ohne Bereitstellung von zusätzlichem Sauerstoff aus einer entsprechenden Atmosphäre. Der eigentliche Lötprozess (hier technisch gleichbedeutend mit dem so genannten Hartlöten) erfolgt nach einem weiteren Temperaturanstieg bei Temperaturen von über 900 °C.

Durch die applizierte Oberflächenschicht wird insbesondere der direkte Kontakt von Kohlenstoff mit den Elementen Chrom und Eisen des Grundwerkstoffs des Metallblechs verhindert. Eine ggf. unerwünschte Verbindung zwischen den Oberflächen von benachbarten Komponenten erfolgt somit nicht. Entsprechend kann eine Abgasbehandlungseinheit erzeugt werden, bei der Verbindungen zwischen den Komponenten nur an den gewünschten und mit Lot versehenen Kontaktstellen der Oberflächen miteinander gebildet werden. Somit ist es z. B. möglich, dass unterschiedliche Ausdehnungskoeffizienten der einzelnen Komponenten einer Abgasbehandlungseinheit nicht zum Versagen der Verbindung zwischen diesen Komponenten infolge lokal wirksamer unterschiedlicher Längenänderungen führen. Diese können durch gegeneinander teilweise frei bewegliche Komponenten ausgeglichen werden. Weiterhin ist das Schwingungsverhalten der Komponenten der Abgasbehandlungseinheit exakt einstellbar.

Gemäß einer besonders vorteilhaften Weiterbildung des Verfahrens wird nachfolgend zu Schritt v) noch ein Beschichtungsprozess durchgeführt, mit dem eine Abgasbehandlungsschicht aufgetragen wird, die die Oberflächenschicht in dem zumindest einen Teilbereich vollständig bedeckt. Insbesondere dient diese Abgasbehandlungsschicht (ausschließlich) der Behandlung der durch die Abgasbehandlungseinheit geleiteten Abgase. Die applizierte Oberflächenschicht leistet entsprechend keinen (nennenswerten) Beitrag zur Umsetzung von Schadstoffen im Abgas.

Gemäß einem weiteren Aspekt wird eine Abgasbehandlungseinheit vorgeschlagen, hergestellt durch das erfindungsgemäße Verfahren und aufweisend zumindest eines durch das erfindungsgemäße Verfahren zur Erzeugung einer Diffusionssperrschicht hergestellten Metallblechs.

Die Abgasbehandlungseinheit weist zumindest einen Wabenkörper und ein Gehäuse auf, wobei zumindest der Wabenkörper oder das Gehäuse mit mindestens einem Metallblech gebildet ist. Das Metallblech besteht aus einem Grundwerkstoff, der zumindest Eisen (Fe), Chrom (Cr) und Aluminium (Al) enthält. Das Metallblech weist zumindest in einem Teilbereich eine Oberflächenschicht auf, die zumindest Aluminiumoxid und ein Metall aus der Gruppe Kobalt (Co) und Nickel (Ni) umfasst. Zumindest in dem Teilbereich bedeckt eine Abgasbehandlungsschicht die Oberflächenschicht vollständig. Weiter ist zumindest in dem Teilbereich in mindestens einem Lotabschnitt eine Lötverbindung an dem Metallblech ausgebildet.
Insbesondere finden die Ausführungen zu den erfindungsgemäßen Verfahren vollständig Anwendung auf die hier angeführte Abgasbehandlungseinheit.

Weiterhin wird ein Kraftfahrzeug, aufweisend zumindest eine Verbrennungskraftmaschine, eine Abgasleitung und eine Abgasbehandlungseinheit vorgeschlagen. Dabei ist die Abgasbehandlungseinheit nach dem erfindungsgemäßen Verfahren hergestellt oder weist zumindest ein nach dem erfindungsgemäßen Verfahren zur Erzeugung einer Diffusionssperrschicht hergestelltes Metallblech auf.

Die aufgebrachte, zumindest Kobaltoxid und/oder Nickeloxid aufweisende oder bildende Oberflächenschicht dient hier insbesondere ausschließlich der Bereitstellung von Sauerstoff zur Bildung einer Diffusionssperrschicht aus Aluminiumoxid und der Unterdrückung von Chromkarbidbrücken an den Kontaktstellen. Sie ist insbesondere nicht dazu vorgesehen, z. B. auch durch Oxidbildung eine katalytisch aktive Substanz für die Abgasreinigung auszubilden. Dies wird bei der hier beschriebenen Abgasbehandlungseinheit vielmehr dadurch erreicht, dass eine (zumindest teilweise) auf die Oberflächenschicht aufgebrachte Abgasbehandlungsschicht vorgesehen ist, die ggf. eine entsprechende katalytische Aktivität hat und/oder mit entsprechenden Eigenschaften (Umwandlung, Einlagerung, Speicherung von Abgasbestandteilen) ausgestattet ist. Somit ist insbesondere gewünscht, dass die Oberflächenschicht nicht mit dem Abgas selbst im Einsatz in Kontakt ist. Ein solcher Kontakt mit dem Abgas kann insbesondere durch die 2-Lagen-Schicht (Oberflächenschicht/ Diffusionssperrschicht und Abgasbehandlungsschicht) vermieden werden, wenn die Oberflächenschicht (nur) zwischen dem Grundwerkstoff der Komponente und der Abgasbehandlungsschicht und/oder zwischen den Grundwerkstoffen benachbarter Komponenten und/oder dem Grundwerkstoff und dem Lot positioniert ist.

Gemäß einer besonders vorteilhaften Ausgestaltung stellt die Abgasbehandlungsschicht sicher, dass zumindest Kobalt und/oder Nickel in der Oberflächenschicht (im Wesentlichen) inert gegenüber einem Abgas ist.

Das heißt mit anderen Worten beispielsweise, dass die Elemente Kobalt und Nickel und/oder Kobalt- und Nickelverbindungen (z. B. Kobalt-/ Nickeloxide) in der Oberflächenschicht nicht katalytisch wirksam sind gegenüber einem Abgas im Einsatz der Abgasbehandlungseinheit. Die Elemente Kobalt und Nickel dienen hier (im Wesentlichen) ausschließlich der Vermeidung von Chromkarbidbrücken zwischen miteinander kontaktierenden benachbarten Komponenten und der Bereitstellung von Sauerstoff zur Bildung der Diffusionssperrschicht. So hat die Abgasbehandlungsschicht (auch) die Funktion, eine ggf. katalytische Aktivität von Kobalt und Nickel und von Kobalt- und Nickelverbindungen gegenüber Bestandteilen des Abgases soweit zu reduzieren, dass höchstens noch eine zu vernachlässigende Unterstützung der Abgaskonvertierung erfolgt oder diese sogar vollständig unterbunden ist.

Insbesondere kann bei anderen Abgasbehandlungsschichten nicht sichergestellt werden (z. B. aufgrund von Diffusionsvorgängen), dass im Einsatz der Abgasbehandlungseinheit die Abgasbehandlungsschicht die Oberflächenschicht gegenüber einem Abgas vollständig abdeckt, so dass überhaupt keine katalytische Aktivität von Kobalt und Nickel oder von Kobaltund Nickelverbindungen auftritt. Die vorliegende Erfindung kann aber auch diese anderen Abgasbehandlungsschichten umfassen, wenn die Abgasbehandlungsschicht die katalytische Funktion der Abgasbehandlungseinheit (nahezu ausschließlich) erfüllt und die Oberflächenschicht entsprechend (nahezu ausschließlich) zur Vermeidung von Chromkarbidbrücken und zur Bereitstellung von Sauerstoff zur Bildung einer Diffusionssperrschicht vorgesehen ist.

Besonders vorteilhaft ist es, wenn die Abgasbehandlungsschicht die Oberflächenschicht (praktisch) vollständig überdeckt und insoweit gasdicht ausgeführt ist, so dass die Oberflächenschicht im Einsatz der Abgasbehandlungseinheit nicht mit einem Abgas in Kontakt ist. "Gasdicht" bedeutet hier insbesondere, dass Bestandteile des Abgases die Beschichtung nicht bis hin zur Oberflächenschicht hindurch durchdringen können, so dass eine katalytische Reaktion zwischen der Oberflächenschicht, insbesondere mit Kobalt und Nickel und Kobalt- und Nickelverbindungen, und Bestandteilen des Abgases nicht (in spürbarem Umfang) auftritt.

Gemäß einer weiteren vorteilhaften Ausgestaltung umfasst die Abgasbehandlungsschicht der Abgasbehandlungseinheit zumindest Washcoat. Washcoat umfasst typischerweise wenigstens einen feuerfesten Oxidträger, wie z. B. aktiviertes Aluminiumoxid (Al₂O₃) und ein oder mehrere Platingruppenmetallkomponenten, wie z. B. Platin, Palladium, Rhodium, Ruthenium und/oder Iridium. Oft werden noch weitere Additive zugegeben, wie z. B. Promotoren und Washcoat-Stabilisatoren. Der Washcoat stellt insbesondere eine besonders große Kontaktfläche für das Abgas zur Verfügung. Dieser Washcoat wird insbesondere erst nach dem Zusammenbau zu einer Abgasbehandlungseinheit, also auch nach Ausbildung der Lötverbindungen durch ein Lötverfahren unter Vakuum oder Schutzgas, auf die Abgasbehandlungseinheit (wenigstens teilweise) als Abgasbehandlungsschicht aufgebracht.

Es wird hiermit nochmals darauf hingewiesen, dass die Ausführungen zu den einzelnen Gegenständen der vorliegenden Erfindung jeweils auf die anderen Gegenstände übertragbar und miteinander kombinierbar sind.

Ausführungsbeispiel zur Herstellung einer Diffusionssperrschicht:

**Schritt a)**

| | |
|---|---|
| Material des Grundwerkstoffs: | Werkstoff 1.4725 |
| Blechstärke des Metallblechs: | 50 µm [Mikrometer] |

**Schritt b)**

| | |
|---|---|
| Material des Metalloxids: | Kobaltoxid |
| Dicke der Oberflächenschicht: | 0,5 µm |
| Applikationsverfahren: | PVD-Verfahren |

**Schritt c)**

| | |
|---|---|
| Art/Umgebung der Wärmebehandlung: | Argon-Schutzgas |
| Temperaturverlauf der Wärmebehandlung: | Aufheizen auf 800 °C und 1,5 Stunden halten |
| Zeitspanne der Wärmebehandlung: | insgesamt 3 Stunden |

**Ergebnis:**

| | |
|---|---|
| Ausprägung der Diffusionssperrschicht: | 0,1 bis 1 µm |

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen schematisch:
- Fig. 1:: ein Kraftfahrzeug mit einer Abgasbehandlungseinheit;
- Fig. 2:: ein Metallblech gemäß Verfahrensschritt a) oder i);
- Fig. 3:: ein Metallblech gemäß Verfahrensschritt b) oder ii);
- Fig. 4:: ein Metallblech gemäß Verfahrensschritt c) oder v);
- Fig. 5:: eine Abgasbehandlungseinheit gemäß Verfahrensschritt iii);
- Fig. 6:: eine Abgasbehandlungseinheit gemäß Verfahrensschritt iv);
- Fig. 7:: eine Abgasbehandlungseinheit gemäß Verfahrensschritt v); und
- Fig. 8:: einen Ausschnitt einer Abgasbehandlungseinheit nach Verfahrensschritt v).

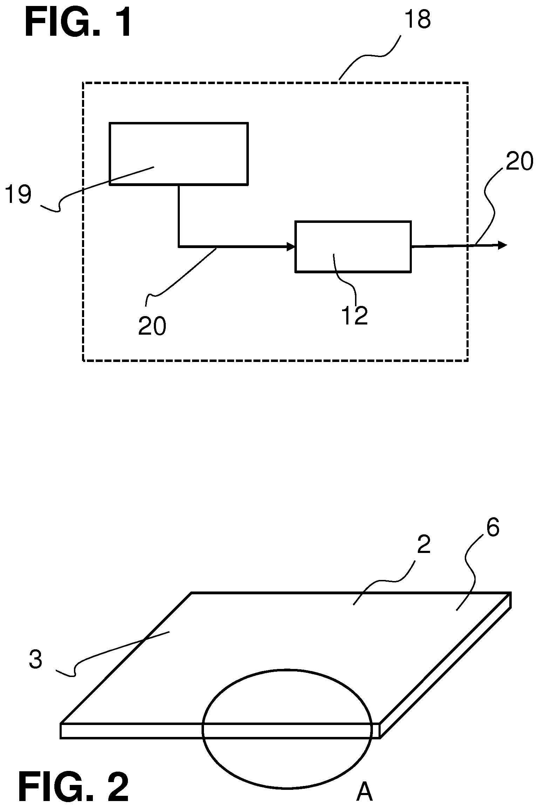

Fig. 1 zeigt ein Kraftfahrzeug 18 mit einer Verbrennungskraftmaschine 19 und einer Abgasbehandlungseinheit 12, die in einer Abgasleitung 20 der Verbrennungskraftmaschine 19 angeordnet ist.

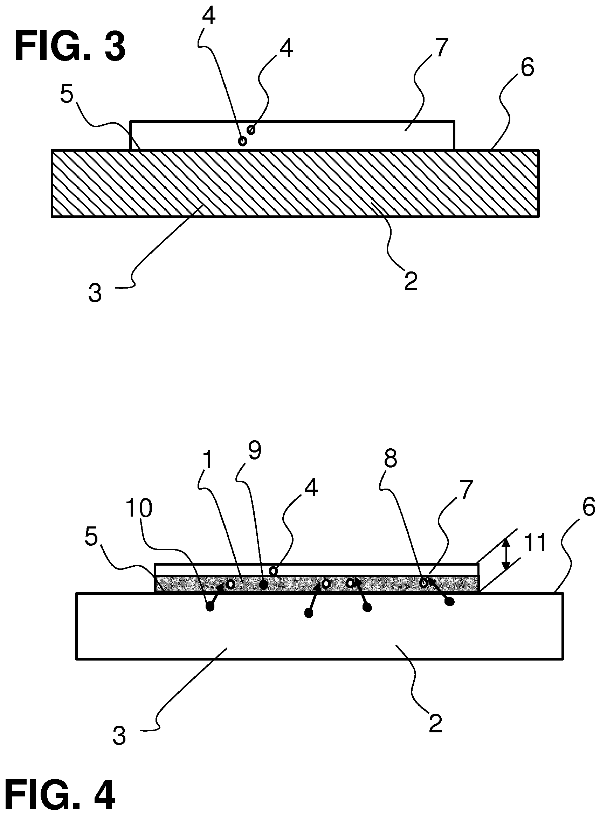

Fig. 2 zeigt ein Metallblech 2 gemäß dem Verfahrensschritt a) oder i). Das Metallblech 2 weist eine Oberfläche 6 auf und besteht aus einem Grundwerkstoff 3. Weiterhin ist hier ein Ausschnitt A gezeigt, der in Fig. 3 beschrieben wird.

Fig. 3 zeigt das Metallblech 2 nach dem Verfahrensschritt b) oder ii). Das Metallblech 2 besteht aus einem Grundwerkstoff 3 und ist in einem Teilbereich 5 mit einer Oberflächenschicht 7 versehen. Die Oberflächenschicht 7 ist auf der Oberfläche 6 des Metallblechs 2 angeordnet. Die Oberflächenschicht 7 umfasst ein Metalloxid 4.

Fig. 4 zeigt das Metallblech 2 nach dem Verfahrensschritt c) oder nach dem Verfahrensschritt v). Infolge der Wärmebehandlung gemäß Verfahrensschritt c) oder v) diffundiert Aluminium 10 aus dem Grundwerkstoff 3 in die Oberflächenschicht 7. Dabei wird in der Nähe der Oberfläche 6 im Bereich der Oberflächenschicht 7 im Teilbereich 5 des Metallblechs 2 mit dem Sauerstoff des Metalloxids 4 Aluminiumoxid 8 gebildet. Das Metalloxid 4 dient also als Träger für den Sauerstoff, der hier für die Umwandlung von Aluminium 10 in Aluminiumoxid 8 benötigt wird. Die Oberflächenschicht 7 weist eine Dicke 11 auf. In der Oberflächenschicht 7 bildet sich, abhängig vom Verlauf (Temperatur, Dauer) der Wärmebehandlung, eine Diffusionssperrschicht 1 ausgehend von der Oberfläche 6 in Richtung der Oberflächenschicht 7 aus. Diese Diffusionssperrschicht 1 wird durch Aluminiumoxid 8 gebildet. Durch die Umwandlung von Aluminium 10 in Aluminiumoxid 8 durch den Sauerstoff des Metalloxids 4 wird dieses Metalloxid 4 zu elementarem Metall 9 umgewandelt. Entsprechend bildet sich hier, zumindest zeitweise, ein mehrschichtiger Aufbau bestehend aus Grundwerkstoff 3, Diffusionssperrschicht 1 (mit einem höheren Anteil an elementarem Metall 9) und einem Teil der Oberflächenschicht 7 mit einem höheren Anteil Metalloxid 4, weil das Aluminium 10 aus dem Grundwerkstoff 3 nicht sofort für die Bildung der Diffusionssperrschicht 1 in der Oberflächenschicht 7 verfügbar ist.

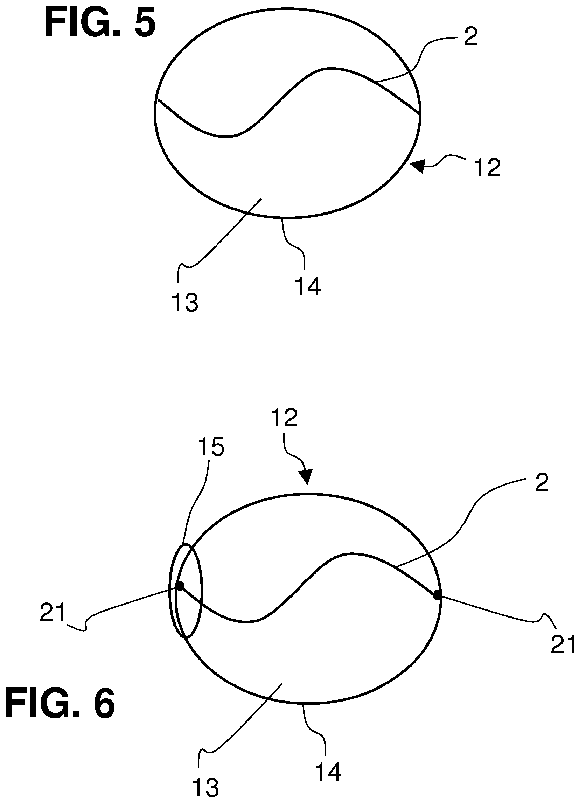

Fig. 5 zeigt eine Abgasbehandlungseinheit 12 gemäß Schritt iii), wobei hier ein Wabenkörper 13 erzeugt ist und der Wabenkörper 13 in das Gehäuse 14 eingefügt wird. In dem Wabenkörper 13 ist hier ein Metallblech 2 angeordnet. Durch den Wabenkörper 13 wird eine von einem Abgas durchströmbare Struktur geschaffen, die als Abgasbehandlungseinheit 12 in einer Abgasleitung 20 eines Kraftfahrzeugs 18 eingesetzt werden kann.

Fig. 6 zeigt die Abgasbehandlungseinheit 12 gemäß Schritt iv) des Verfahrens. Hier wird in einem Lotabschnitt 15 des Wabenkörpers 13 und des Gehäuses 14 ein Lotmaterial 21 angeordnet. Das Lotmaterial 21 ist zumindest an dem Metallblech 2 angeordnet.

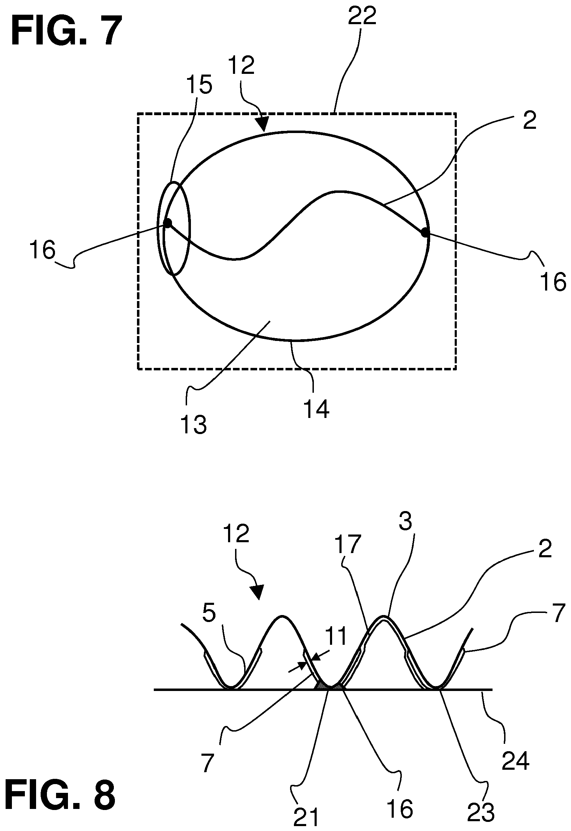

Fig. 7 zeigt die Abgasbehandlungseinheit gemäß dem Verfahrensschritt v). Der Wabenkörper 13 und das Gehäuse 14 sind in einer Wärmebehandlungsvorrichtung 22 zur Durchführung des Lötprozesses angeordnet. Das Metallblech 2 bildet zumindest teilweise den Wabenkörper 13. Infolge des Lötprozesses werden zumindest im Lotabschnitt 15 Lötverbindungen 16 ausgebildet.

Fig. 8 zeigt die Abgasbehandlungseinheit 12 nach dem Verfahrensschritt v). Das Metallblech 2 weist zumindest in Teilbereichen 5 eine Oberflächenschicht 7 mit einer Dicke 11 auf. Zumindest teilweise wird die Oberflächenschicht 7 von einer Abgasbehandlungsschicht 17 überdeckt. Im Bereich der Kontaktstellen 23 ist die Oberflächenschicht 7 angeordnet, so dass hier keine Diffusionsverbindung zwischen dem Metallblech 2 und einer anderen Komponente 24 der Abgasbehandlungseinheit 12 gebildet wird. An der Lötverbindung 16 ist ebenfalls die Oberflächenschicht 7 ausgebildet. Die Lötverbindung 16 wird zwischen dem Metallblech 2 und der Komponente 24 durch Lötmaterial 21 nach Durchführung des Lötprozesses gebildet.

### Bezugszeichenliste

- 1: Diffusionssperrschicht
- 2: Metallblech
- 3: Grundwerkstoff
- 4: Metalloxid
- 5: Teilbereich
- 6: Oberfläche
- 7: Oberflächenschicht
- 8: Aluminiumoxid
- 9: Metall
- 10: Aluminium
- 11: Dicke
- 12: Abgasbehandlungseinheit
- 13: Wabenkörper
- 14: Gehäuse
- 15: Lotabschnitt
- 16: Lötverbindung
- 17: Abgasbehandlungsschicht
- 18: Kraftfahrzeug
- 19: Verbrennungskraftmaschine
- 20: Abgasleitung
- 21: Lotmaterial
- 22: Wärmebehandlungsvorrichtung
- 23: Kontaktstelle
- 24: Komponente

## Patentansprüche

1. Verfahren zur Erzeugung einer Diffusionssperrschicht (1) umfassend Aluminiumoxid (8) auf einem Metallblech (2), das aus einem Eisenwerkstoff als Grundwerkstoff (3) besteht, der als Hauptlegierungselemente zusätzlich Chrom (Cr) und Aluminium (Al) enthält, wobei einerseits der Chromanteil mindestens um den Faktor 3 größer ist als der Aluminiumanteil und andererseits der Chromanteil im Bereich von 12 bis 25 Gewichts-% liegt während der Aluminiumanteil im Bereich von 1 bis 7 Gewichts-% liegt, wobei das Verfahren zumindest folgende Schritte umfasst:
a) Bereitstellen des Metallblechs (2),
b) Applizieren zumindest eines Metalloxides (4) ausgewählt aus der Gruppe Kobaltoxid und Nickeloxid oder Applizieren zumindest einer Materialverbindung, die infolge einer Temperaturerhöhung zumindest ein Metalloxid (4) ausgewählt aus der Gruppe Kobaltoxid und Nickeloxid bilden kann, auf zumindest einem Teilbereich (5) einer Oberfläche (6) des Metallblechs (2) als Oberflächenschicht (7),
c) Durchführen einer Wärmebehandlung oberhalb von 650 °C und unterhalb von 1200 °C in einer Behandlungszeit von 10 Minuten und 60 Minuten unter Vakuum oder Schutzgas mit dem Metallblech (2) aufweisend die Oberflächenschicht (7), wobei nur in dem zumindest einen Teilbereich (5) in der Oberflächenschicht (7) eine Diffusionssperrschicht (1) umfassend Aluminiumoxid (8), unter Reduktion des Metalloxids (4) zu einem Metall (9) und Oxidation von aus dem Grundwerkstoff (3) ausdiffundierendem Aluminium (10) zu Aluminiumoxid (8) entsteht.

2. Verfahren nach Patentanspruch 1, wobei das Metalloxid (4) oder die Materialverbindung in der Oberflächenschicht (7) in Schritt b) mit einem Anteil von mindestens 40 Gewichts-% vorliegt.

3. Verfahren nach einem der vorhergehenden Patentansprüche, wobei nach Durchführung des Schrittes c) das Aluminiumoxid (8) homogen in der Oberflächenschicht (7) verteilt ist.

4. Verfahren nach einem der vorhergehenden Patentansprüche, wobei sich nach Durchführung des Schrittes c) der Anteil von einem elementar vorliegenden Metall (9) des Metalloxids (4) oder der Materialverbindung in der Oberflächenschicht (7) um mindestens 5 Gewichts-% erhöht hat.

5. Verfahren nach einem der vorhergehenden Patentansprüche, wobei in Schritt a) der Anteil von Aluminium (10) im Grundwerkstoff (3) zwischen 1 und 7 Gewichts-% liegt und der Anteil von Aluminium (10) im Metalloxid (4) oder in der Materialverbindung in Schritt b) maximal 2 Gewichts-% beträgt.

6. Verfahren nach einem der vorhergehenden Patentansprüche, wobei der Grundwerkstoff (3) in Schritt a) maximal 20 Gewichts-% des Metalls (9) des Metalloxids (4) oder der Materialverbindung aus Schritt b) aufweist.

7. Verfahren zur Herstellung einer Abgasbehandlungseinheit (12), wobei die Abgasbehandlungseinheit (12) einen Wabenkörper (13) und ein Gehäuse (14) aufweist und zumindest der Wabenkörper (13) oder das Gehäuse (14) mit einem Metallblech (2) gebildet ist und das Metallblech (2) aus einem Eisenwerkstoff als Grundwerkstoff (3) besteht, der als Hauptlegierungselemente zusätzlich Chrom (Cr) und Aluminium (Al) enthält, wobei einerseits der Chromanteil mindestens um den Faktor 3 größer ist als der Aluminiumanteil und andererseits der Chromanteil im Bereich von 12 bis 25 Gewichts-% liegt während der Aluminiumanteil im Bereich von 1 bis 7 Gewichts-% liegt, wobei weiter das Verfahren wenigstens die folgenden Schritte umfasst:
i) Bereitstellen mindestens eines Metallblechs (2) zur Ausbildung eines Gehäuses (14) oder eines Wabenkörpers (13),
ii) Applizieren zumindest eines Metalloxides (4) ausgewählt aus der Gruppe Kobaltoxid und Nickeloxid oder Applizieren zumindest einer Materialverbindung, die infolge einer Temperaturerhöhung oberhalb von 650 °C und unterhalb von 1200 °C in einer Behandlungszeit von 10 Minuten und 60 Minuten zumindest ein Metalloxid (4) ausgewählt aus der Gruppe Kobaltoxid und Nickeloxid bilden kann, auf zumindest einem Teilbereich (5) einer Oberfläche (6) des mindestens einen Metallblechs (2) als Oberflächenschicht (7),
iii) Ausbilden eines Wabenkörpers (13) und Einfügen des Wabenkörpers (13) in ein Gehäuse (14), und davor oder gleichzeitig
iv) Beloten zumindest des Wabenkörpers (13) oder des Gehäuses (14) in mindestens einem Lotabschnitt (15),
v) Durchführen eines Lötprozesses oberhalb von 1000 °C mit dem mindestens einen Metallblech (2) aufweisend Metalloxid (4) unter Vakuum oder Schutzgas, wobei
- nur in dem zumindest einen Teilbereich (5) in der Oberflächenschicht (7) eine Diffusionssperrschicht (1) umfassend Aluminiumoxid (8), unter Reduktion des Metalloxids (4) zu einem Metall (9) und Oxidation von aus dem Grundwerkstoff (3) ausdiffundierendem Aluminium (10) zu Aluminiumoxid (8) entsteht, und in dem mindestens einen Lotabschnitt (15) eine Lötverbindung (16) an dem mindestens einen Metallblech (2) entsteht.

8. Verfahren nach Patentanspruch 7, wobei nachfolgend Schritt v) noch ein Beschichtungsprozess durchgeführt wird, mit dem eine Abgasbehandlungsschicht (17) aufgetragen wird, die die Oberflächenschicht (7) in dem zumindest einen Teilbereich (5) vollständig bedeckt.

## Claims

1. Process for producing a diffusion barrier layer (1) comprising aluminum oxide (8) on a metal sheet (2) which consists of an iron material as base material (3) additionally containing chromium (Cr) and aluminum (Al) as main alloying elements, wherein on the one hand the chromium proportion is greater at least by the factor 3 than the aluminum proportion and on the other hand the chromium proportion is in the range from 12 to 25% by weight whereas the aluminum proportion is in the range from 1 to 7% by weight, wherein the process comprises at least the following steps:
a) provision of the metal sheet (2),
b) application of at least one metal oxide (4) selected from the group consisting of cobalt oxide and nickel oxide or application of at least one material compound which as a result of a temperature increase can form at least one metal oxide (4) selected from the group consisting of cobalt oxide and nickel oxide to at least one subregion (5) of a surface (6) of the metal sheet (2) as surface layer (7),
c) carrying out of a heat treatment above 650°C and below 1200°C in a treatment time of 10 minutes and 60 minutes under reduced pressure or protective gas on the metal sheet (2) having the surface layer (7), wherein a diffusion barrier layer (1) comprising aluminum oxide (8) is formed only in the at least one subregion (5) of the surface layer (7), with reduction of the metal oxide (4) to a metal (9) and oxidation of aluminum (10) diffusing out of the base material (3) to aluminum oxide (8).

2. Process according to Claim 1, wherein the metal oxide (4) or the material compound in the surface layer (7) in step b) is present in a proportion of at least 40% by weight.

3. Process according to either of the preceding claims, wherein the aluminum oxide (8) is homogeneously distributed in the surface layer (7) after carrying out step c).

4. Process according to any of the preceding claims, wherein the proportion of a metal (9) of the metal oxide (4) or of the material compound which is present in elemental form in the surface layer (7) has increased by at least 5% by weight after carrying out step c).

5. Process according to any of the preceding claims, wherein the proportion of aluminum (10) in the base material (3) in step a) is in the range from 1 to 7% by weight and the proportion of aluminum (10) in the metal oxide (4) or in the material compound in step b) is not more than 2% by weight.

6. Process according to any of the preceding claims, wherein the base material (3) in step a) has a maximum of 20% by weight of the metal (9) of the metal oxide (4) or of the material compound from step b).

7. Process for producing an exhaust gas treatment unit (12), wherein the exhaust gas treatment unit (12) comprises a honeycomb body (13) and a housing (14) and at least the honeycomb body (13) or the housing (14) is formed by a metal sheet (2) and the metal sheet (2) consists of an iron material as base material (3) additionally containing chromium (Cr) and aluminum (Al) as main alloying elements, wherein on the one hand the chromium proportion is greater at least by the factor 3 than the aluminum proportions and on the other hand the chromium proportion is in the range from 12 to 25% by weight whereas the aluminum proportion is in the range from 1 to 7% by weight, wherein the process further comprises at least the following steps:
i) provision of at least one metal sheet (2) to form a housing (14) or a honeycomb body (13),
ii) application of at least one metal oxide (4) selected from the group consisting of cobalt oxide and nickel oxide or application of at least one material compound which as a result of a temperature increase above 650°C and below 1200°C in a treatment time of 10 minutes and 60 minutes can form at least one metal oxide (4) selected from the group consisting of cobalt oxide and nickel oxide to at least a subregion (5) of a surface (6) of the at least one metal sheet (2) as surface layer (7),
iii) formation of a honeycomb body (13) and insertion of the honeycomb body (13) into a housing (14), and before this or simultaneously
iv) application of solder to at least the honeycomb body (13) or the housing (14) in at least one solder section (15),
v) carrying out of a soldering process above 1000°C on the at least one metal sheet (2) comprising metal oxide (4) under reduced pressure or protective gas, wherein
- a diffusion barrier layer (1) comprising aluminum oxide (8) is formed only in the at least one subregion (5) in the surface layer (7), with reduction of the metal oxide (4) to a metal (9) and oxidation of the aluminum (10) diffusing out of the base material (3) to aluminum oxide (8) and
- a soldered join (16) is formed on the at least one metal sheet (2) in the at least one solder section (15).

8. Process according to Claim 7, wherein, after step v), a further coating process by means of which an exhaust gas treatment layer (17) is applied which completely covers the surface layer (7) in the at least one subregion (5) is carried out.

## Revendications

1. Procédé de formation d'une couche de barrière à la diffusion (1) comprenant de l'oxyde d'aluminium (8) sur une tôle métallique (2), qui est constituée par un matériau à base de fer en tant que matériau de base (3), qui contient en outre du chrome (Cr) et de l'aluminium (Al) en tant qu'éléments d'alliage principaux, d'un côté, la proportion de chrome étant au moins 3 fois supérieure à la proportion d'aluminium et, d'un autre côté, la proportion de chrome se situant dans la plage allant de 12 à 25 % en poids tandis que la proportion d'aluminium se situe dans la plage allant de 1 à 7 % en poids, le procédé comprenant au moins les étapes suivantes :
a) la préparation de la tôle métallique (2),
b) l'application d'au moins un oxyde métallique (4) choisi dans le groupe constitué par l'oxyde de cobalt et l'oxyde de nickel, ou l'application d'au moins un composé de matériau qui peut former en conséquence d'une élévation de la température au moins un oxyde métallique (4) choisi dans le groupe constitué par l'oxyde de cobalt et l'oxyde de nickel, sur au moins une zone partielle (5) d'une surface (6) de la tôle métallique (2) en tant que couche de surface (7),
c) la réalisation d'un traitement thermique au-dessus de 650 °C et en dessous de 1 200 °C pendant une durée de traitement comprise entre 10 minutes et 60 minutes sous vide ou gaz protecteur avec la tôle métallique (2) comprenant la couche de surface (7), une couche de barrière à la diffusion (1) comprenant de l'oxyde d'aluminium (8) se formant uniquement dans ladite au moins une zone partielle (5) dans la couche de surface (7) par réduction de l'oxyde métallique (4) en un métal (9) et oxydation de l'aluminium (10) diffusé à partir du matériau de base (3) en oxyde d'aluminium (8).

2. Procédé selon la revendication 1, dans lequel l'oxyde métallique (4) ou le composé de matériau est présent dans la couche de surface (7) à l'étape b) en une proportion d'au moins 40 % en poids.

3. Procédé selon l'une quelconque des revendications précédentes, dans lequel, après la réalisation de l'étape c), l'oxyde d'aluminium (8) est distribué de manière homogène dans la couche de surface (7).

4. Procédé selon l'une quelconque des revendications précédentes, dans lequel, après la réalisation de l'étape c), la proportion d'un métal présent sous forme élémentaire (9) de l'oxyde métallique (4) ou du composé de matériau dans la couche de surface (7) a augmenté d'au moins 5 % en poids.

5. Procédé selon l'une quelconque des revendications précédentes, dans lequel, à l'étape a), la proportion d'aluminium (10) dans le matériau de base (3) est comprise entre 1 et 7 % en poids, et la proportion d'aluminium (10) dans l'oxyde métallique (4) ou dans le composé de matériau à l'étape b) est d'au plus 2 % en poids.

6. Procédé selon l'une quelconque des revendications précédentes, dans lequel le matériau de base (3) à l'étape a) comprend au plus 20 % en poids du métal (9) de l'oxyde métallique (4) ou du composé de matériau de l'étape b).

7. Procédé de fabrication d'une unité de traitement de gaz d'échappement (12), l'unité de traitement de gaz d'échappement (12) comprenant un corps alvéolé (13) et un boîtier (14), et au moins le corps alvéolé (13) ou le boîtier (14) étant formé avec une tôle métallique (2), et la tôle métallique (2) étant constituée par un matériau à base de fer en tant que matériau de base (3), qui contient en outre du chrome (Cr) et de l'aluminium (Al) en tant qu'éléments d'alliage principaux, d'un côté, la proportion de chrome étant au moins 3 fois supérieure à la proportion d'aluminium et, d'un autre côté, la proportion de chrome se situant dans la plage allant de 12 à 25 % en poids tandis que la proportion d'aluminium se situe dans la plage allant de 1 à 7 % en poids, le procédé comprenant par ailleurs au moins les étapes suivantes :
i) la mise à disposition d'au moins une tôle métallique (2) pour la formation d'un boîtier (14) ou d'un corps alvéolé (13),
ii) l'application d'au moins un oxyde métallique (4) choisi dans le groupe constitué par l'oxyde de cobalt et l'oxyde de nickel ou l'application d'au moins un composé de matériau qui peut former en conséquence d'une élévation de la température au-dessus de 650 °C et en dessous de 1 200 °C pendant un temps de traitement compris entre 10 minutes et 60 minutes au moins un oxyde métallique (4) choisi dans le groupe constitué par l'oxyde de cobalt et l'oxyde de nickel, sur au moins une zone partielle (5) d'une surface (6) de ladite au moins une tôle métallique (2) en tant que couche de surface (7),
iii) la formation d'un corps alvéolé (13) et l'insertion du corps alvéolé (13) dans un boîtier (14), et avant ou simultanément,
iv) l'application d'un métal d'apport de brasage au moins sur le corps alvéolé (13) ou le boîtier (14) au moins dans une section de brasage (15),
v) la réalisation d'un procédé de brasage au-dessus de 1 000 °C avec ladite au moins une tôle métallique (2) comprenant l'oxyde métallique (4) sous vide ou gaz protecteur,
- une couche de barrière à la diffusion (1) comprenant de l'oxyde d'aluminium (8) se formant uniquement dans ladite au moins une zone partielle (5) dans la couche de surface (7) par réduction de l'oxyde métallique (4) en un métal (9) et oxydation de l'aluminium (10) diffusé à partir du matériau de base (3) en oxyde d'aluminium (8), et
- une liaison par brasage (16) se formant dans ladite au moins une section de brasage (15) sur ladite au moins une tôle métallique (2).

8. Procédé selon la revendication 7, dans lequel, après l'étape v), un procédé de revêtement est encore réalisé, avec lequel une couche de traitement de gaz d'échappement (17) est appliquée, qui recouvre entièrement la couche de surface (7) dans ladite au moins une zone partielle (5).
